# EUROPÄISCHE PATENTANMELDUNG

(11) **EP 0 740 099 A1**
(43) Veröffentlichungstag der Anmeldung: **30.10.1996**
(21) Anmeldenummer: 96106771.7
(22) Anmeldetag: 29.04.1996
(51) Int. Cl.: F16L 23/00

(54) **Justiervorrichtung**

(30) Priorität: 29.04.1995 DE 19515237
(71) Anmelder: KROHNE MESSTECHNIK GMBH & CO. KG, D-47058 Duisburg (DE)
(72) Erfinder: Verdoom, Dick, 2971 AM Bleskensgraaf (NL); De Roo, Willem, 3361 BT Sliedrecht (NL)
(74) Vertreter: Gesthuysen, von Rohr & Weidener

(57) **Zusammenfassung**

Die Justiervorrichtung dient zur Justierung einer Einbauvorrichtung (1) zwischen zwei Flanschen (2,3) eines Rohrleitungssystems (4), wobei die beiden Flansche (2,3) über vorzugsweise bolzenförmige Verbindungsmittel (5) verbindbar sind.

Die Justiervorrichtung besteht aus einem im wesentlich durch Einströmen eines Mediums expandierbaren Expansionselement (7), wobei das Expansionselement (7) im expandierten Zustand an der Einbauvorrichtung (1) und den Verbindungselementen (5) anliegt.

## Beschreibung

Die Erfindung betrifft eine Justiervorrichtung zur Justierung einer Einbauvorrichtung zwischen zwei Flanschen eines Rohrleitungssystems, wobei die beiden Flansche über vorzugsweise bolzenförmige Verbindungsmittel verbindbar sind.

Einbauvorrichtungen zur Verwendung in einem Rohrleitungssystem, beispielsweise Meßvorrichtung zum Messen von Verfahrensparametern, wie Volumendurchflußmeßgeräte, und Zubehörteile, werden grundsätzlich für die Montage zwischen zwei Flanschen des Rohrleitungssystems entworfen. Diese Flansche entsprechen jedoch bei verschiedenen Rohrleitungssystemen unterschiedlichen Normen, wie beispielsweise DIN, ANSI und JIS. Zum Zwecke der Standardisierung werden heutzutage vermehrt flanschlose Vorrichtungen verwendet, die zwischen den Flanschen von zwei Abschnitten des Rohrleitungssystems einklemmbar sind. Die Flansche sind bei dieser Art der Montage über Verbindungsmittel verbunden, die in Längsrichtung der Einbauvorrichtung verlaufen. Als Verbindungsmittel werden in der Regel Bolzen verwendet, die jedoch abhängig vom Anwendungsfall und der verwendeten Norm unterschiedliche Bolzendurchmesser aufweisen können. Im montierten Zustand der weist im wesentlichen rohrförmigen Einbauvorrichtung entsteht folglich ein mehr oder weniger großes Spiel zwischen dem Mantel der Einbauvorrichtung und den vorzugsweise bolzenförmig ausgebildeten Verbindungsmitteln. Dieses Spiel ist einerseits abhängig von dem Flanschtyp des jeweiligen Rohrleitungssystems und dem Durchmesser der vorzugsweise bolzenförmig ausgeführten Verbindungsmittel und andererseits abhängig von der Ausgestaltung der Einbauvorrichtung. Für eine optimale Funktion ist es jedoch bei den meisten Einbauvorrichtung unbedingt erforderlich, daß die Achse der Einbauvorrichtung absolut koaxial mit der Achse des Rohrleitungssystems verläuft. Um einen derartigen koaxialen Verlauf sicherzustellen, sind im Stand der Technik bereits Justiervorrichtungen bekannt.

Bei den bekannten Justiervorrichtungen wird die Justierung mittels zweier Ringe mit Exzentern durchgeführt, die um den Mantel einer zu montierenden Einbauvorrichtung angeordnet sind. Durch Verdrehen der Ringe werden die vorzugsweise bolzenförmig ausgeführten Verbindungsmittel nach außen hin an den Rand der Flanschbohrungen für die Verbindungsmittel gedrückt, wobei gleichzeitig die Einbauvorrichtung gegenüber dem Rohrleitungssystem justiert wird.

Die bekannten Justiervorrichtungen sind unter verschiedenen Gesichtspunkten problematisch. Zunächst können die bekannten Justiervorrichtungen nur einmal verwendet werden. Nach der Montage der Einbauvorrichtung in das Rohrleitungssystem sind die bekannten Justiervorrichtungen innerhalb der Verbindungsmittel gefangen. Da die bekannten Justiervorrichtungen somit über die gesamte Lebensdauer mit der Einbauvorrichtung verbunden sind, müssen sie ebenso wie die Einbauvorrichtungen unter Umständen gegen extreme Umgebungsbedingungen, wie beispielsweise hohe oder niedrige Temperaturen, beständig sein, was zusätzliche Kosten verursacht. Weiter ist es bei den bekannten Justiervorrichtungen notwendig, daß diese sowohl an den verwendeten Flanschtyp angepaßt sind, als auch daß sie an den Durchmesser der Einbauvorrichtung angepaßt sind. Der Einsatz der bekannten Justiervorrichtungen bei Einbauvorrichtungen mit unregelmäßig geformtem Mantel ist nicht oder nur unter besonderen Bedingungen möglich. Schließlich wird bei der Verwendung der bekannten Justiervorrichtungen nicht selten der Mantel der Einbauvorrichtung beschädigt.

Der vorliegenden Erfindung liegt somit die Aufgabe zugrunde, eine einfach zu handhabende, flexible und kostengünstige Justiervorrichtung zur Verfügung zu stellen.

Die zuvor dargelegte und aufgezeigte Aufgabe ist erfindungsgemäß dadurch gelöst, daß die Justiervorrichtung im wesentlichen aus einem durch Einströmen eines Mediums expandierbaren Expansionselement besteht und daß das Expansionselement im expandierten Zustand an der Einbauvorrichtung und den Verbindungselementen anliegt. Die erfindungsgemäße Justiervorrichtung wird im nicht expandierten Zustand möglichst großflächig zwischen die Einbauvorrichtung und die umgebenden vorzugsweise bolzenfömigen Verbindungsmittel eingelegt. Durch das anschließende Expandieren des Expansionselements mittels eines einströmenden Mediums, wie beispielsweise eines Gases oder einer Flüssigkeit, wird die im wesentlichen rohrförmige Einbauvorrichtung zwischen den Verbindungsmitteln bei ausreichenden Druck des einströmenden Mediums derart justiert, daß die Achse der Einbauvorrichtung koaxial zur Achse des Rohrleitungssystems liegt. Nach dem die Einbauvorrichtung derart justiert worden ist, kann sie, falls notwendig, noch durch eine Drehung um ihre Achse in eine geeignet Einbaulage gebracht werden. Anschließend werden die Verbindungsmittel der beiden Flansche angezogen und so die Einbauvorrichtung zwischen den beiden Flanschen des Rohrleitungssystems eingespannt. Nach dem Einspannen der Einbauvorrichtung läßt man das Medium aus dem Expansionselement ausströmen und kann nach dem Erschlaffen des Expansionselement dieses aus dem Zwischenraum zwischen Einbauvorrichtung und Verbindungsmitteln entfernen.

Die erfindungsgemäße Justiervorrichtung verbleibt also zum einen nicht an der Einbauvorrichtung und ist dadurch mehrfach verwendbar bzw. muß nicht an extreme Umgebungsbedingungen beim Betrieb der Einbauvorrichtung angepaßt sein, wobei sie zum anderen eine viel flexiblere Anpassung an die verwendete Flanschtypen bzw. Verbindungsmittel und Einbauvorrichtungen gewährleistet und geht darüber hinaus noch besonders schonend mit dem Mantel der Einbauvorrichtung um. Im Vergleich zu den bekannten Justiervorrichtung ist die erfindungsgemäße Justiervorrichtung außerdem sehr viel kostengünstiger herstellbar.

Eine erste vorteilhafte Ausgestaltung erfährt die erfindungsgemäße Justiervorrichtung dadurch, daß das Expansionselement aus einem möglichst unelastischem Material besteht. Durch diese ergänzende Maßnahme ist gewährleistet, daß sich zwischen der Einbauvorrichtung und den Verbindungsmitteln relativ große Kräfte aufbauen, da der aufgebaute Druck nicht über eine Expansion des Expansionselementes an Stellen, an dem dieses nicht an der Einbauvorrichtung oder den Verbindungsmitteln anliegt, wirkungslos verpuffen kann.

Eine besonders handhabungsfreundliche Ausgestaltung erfährt die erfindungsgemäße Justiervorrichtung dadurch, daß das Expansionselement im wesentlichen manschettenförmig ausgebildet ist. Durch eine derartige Ausgestaltung des Expansionselement ist gewährleistet, daß dieses mit einem Handgriff um die jeweilige Einbauvorrichtung legbar ist.

Eine besonders flexible Ausgestaltung erfährt die erfindungsgemäße Justiervorrichtung dadurch, daß das Expansionselement im wesentlichen schlauchförmig ausgebildet ist und daß die Länge des schlauchförmigen Expansionselementes zumindest ein Vielfaches des Umfangs der Einbauvorrichtung beträgt. Durch diese Maßnahme ist gewährleistet, daß das Expansionselement nahezu in Verbindung mit allen denkbaren Einbauvorrichtungen dadurch eingesetzt werden kann, daß es in regelmäßigen Abständen um die Einbauvorrichtung gewickelt wird.

Bei mehrfachen Einsatz eines solchen schlauchförmig ausgebildeten Expansionselementes in Verbindung mit einer bestimmten Einbauvorrichtung ist es vorteilhaft, daß schlauchförmige Expansionselement mit einer Manschette zu verbinden. Hierdurch wird eine besonders einfache Handhabung der erfindungsgemäßen Justiervorrichtung gewährleistet.

Die einfachste und kostengünstigste Ausführung erfährt das schlauchförmige Expansionselement dadurch, daß es an seinem ersten Ende fest verschlossen ist. Alternativ hierzu kann das schlauchförmige Expansionselement derart ausgestaltet werden, daß es an einer beliebigen Stelle verschließbar ist. Der Verschluß des schlauchförmigen Expansionselement an einer beliebigen Stelle erfolgt vorteilhafter Weise durch eine Klemmvorrichtung. Gegenüber dem kostengünstigen Verschluß an dem ersten Ende des schlauchförmigen Expansionselementes weist der Verschluß an einer beliebigen Stelle des Expansionselementes den Vorteil auf, daß das in das schlauchförmige Expansionselement einströmende Medium nicht unbenutzt in einen zur Justierung nicht mehr benötigten Abschnitt des schlauchförmigen Expansionselementes einströmt.

Ein schlauchförmig ausgeführtes Expansionselement erfährt eine besonders vorteilhafte Ausgestaltung dadurch, daß das Medium von einem zweiten Ende her in das schlauchförmige Expansionselement einströmt. Es braucht somit kein gesonderter Zugang an den Expansionselement vorgesehen sein.

Eine besonders vorteilhafte Ausgestaltung erfährt die erfindungsgemäße Justiervorrichtung dadurch, daß als Medium das Gas einer Hochdruckpatrone einsetzbar ist. Hierdurch wird eine besonders einfache, ortsunabhängige Handhabung der Justiervorrichtung gewährleistet. Selbstverständlich ist ebenso der Anschluß des Expansionselementes an in Installationsnähe vorhandene Hochdruck-Luftsysteme oder Wasserleitungen denkbar.

Im einzelnen gibt es nun eine Vielzahl von Möglichkeiten, die erfindungsgemäße Justiervorrichtung auszugestalten und weiterzubilden. Dazu wird einerseits auf die dem Patentanspruch 1 nachgeordneten Patentansprüche, andererseits auf die Beschreibung eines bevorzugten Ausführungsbeispiels in Verbindung mit der Zeichnung verwiesen. In der Zeichnung zeigen
- Fig. 1: eine Seitenansicht eines Rohrleitungssystems, in welchem eine Einbauvorrichtung mittels eines Ausführungsbeispiels der erfindungsgemäßen Justiervorrichtung justiert werden soll,
- Fig. 2: einen Schnitt durch das Rohrleitungssystem und die Einbauvorrichtung entlang der Linie II - II aus Fig. 1 vor einer Justierung,
- Fig. 3: einen Schnitt durch das Rohrleitungssystem und die Einbauvorrichtung entlang der Linie II - II aus Fig. 1 nach der Justierung,
- Fig. 4: einen der Fig. 3 entsprechenden Schnitt durch ein Rohrleitungssystem und eine andere Ausführungsform einer erfindungsgemäßen Justiervorrichtung,
- Fig. 5: eine Skizze zur Erläuterung einer weiteren Ausführungsform der erfindungsgemäßen Justiervorrichtung und
- Fig. 6: eine Skizze zur Erläuterung der Ausführungsform der erfindungsgemässen Justiervorrichtung nach Fig. 4.

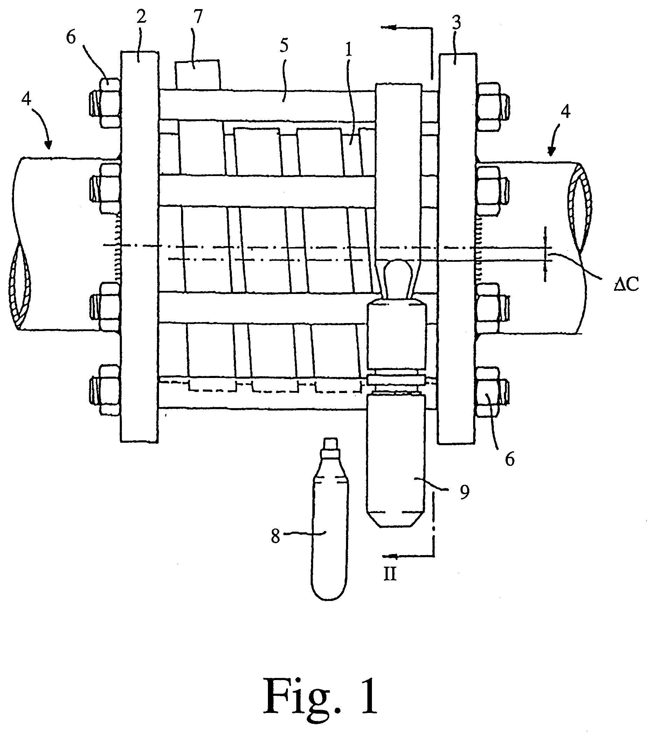

Fig. 1 der Zeichnung zeigt ein Ausführungsbeispiel einer erfindungsgemäßen Justiervorrichtung zur Justierung einer hier im wesentlichen rohrförmigen Einbauvorrichtung 1 zwischen zwei Flanschen 2, 3 eines Rohrleitungssystems 4, wobei die beiden Flansche 2, 3 über bolzenförmige Verbindungsmittel 5 verbunden sind. Die bolzenförmigen Verbindungsmittel 5 sind an ihren Enden mit aufgebrachten Muttern 6 versehen.

Das in Fig. 1 dargestellte Ausführungsbeispiel einer erfindungsgemäßen Justiervorrichtung 1 besteht im wesentlichen aus einem durch Einströmen eines Mediums expandierbaren schlauchförmigen Expansionselement 7. In Fig. 1 ist das schlauchförmige Expansionselement 7 im nicht expandierten Zustand dargestellt. Das schlauchförmige Expansionselement 7 ist in regelmäßigen Abständen um die Einbauvorrichtung 1 gewickelt dargestellt. Durch die Wicklung des schlauchförmigen Expansionselementes 7 über die gesamte Länge der Einbauvorrichtung 1 ist eine gleichmäßige Justierung der Einbauvorrichtung 1 über die gesamte Länge gewährleistet. Als Quelle des für die Expansion des schlauchförmigen Expansionselement 7 sorgenden Mediums ist in Fig. 1 eine gängige, mit Kohlendioxid gefüllte Hochdruckpatrone 8 dargestellt. Diese Hochdruckpatrone 8 wird in die ebenfalls dargestellte Halterung 9 eingelegt und durch Zuschrauben der Halterung 9 geöffnet.

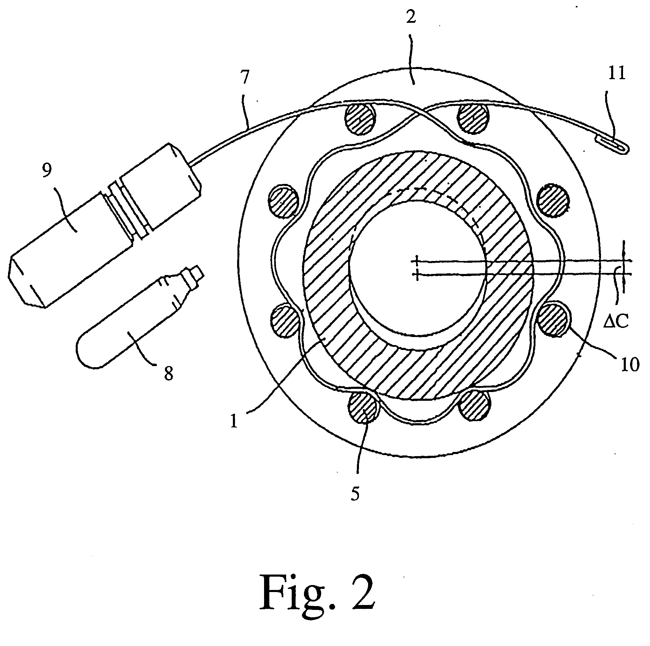

In Fig. 2 ist das in Fig. 1. dargestellte Ausführungsbeispiel einer erfindungsgemäßen Justiervorrichtung entlang der in Fig. 1 eingezeichneten Linie II-II geschnitten dargestellt. In Fig. 2 ist das schlauchförmige Expansionselement 7, wie in Fig. 1, im nicht expandierten Zustand dargestellt. Besonders deutlich ist in Fig. 2 zu erkennen, daß die Achsen der Einbauvorrichtung 1 und des Rohrleitungssystems 4 nicht koaxial liegen, sondern einen Abstand Δ C voneinander aufweisen. In Fig. 2 ist ebenfalls deutlich zu erkennen, daß die bolzenförmigen Verbindungsmittel 5 aufgrund ihres Gewichts jeweils auf den unteren Seiten von Flanschbohrungen 10 in den Flanschen 2, 3 aufliegen. Weiter ist in Fig. 2 zu erkennen, daß das schlauchförmige Expansionselement 7 an seinem ersten Ende 11 fest verschlossen ist.

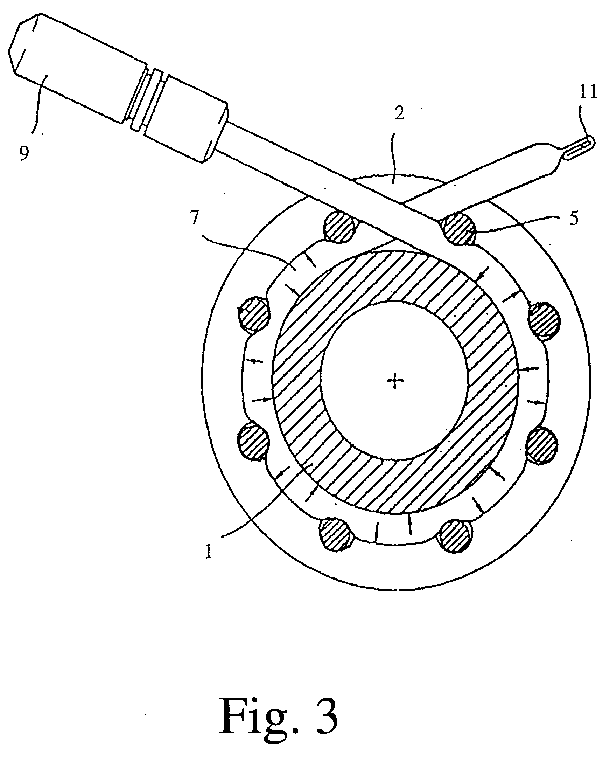

Fig. 3 zeigt nun das Ausführungsbeispiel einer erfindungsgemäßen Justiervorrichtung in expandiertem Zustand in dem schon in Fig. 2 dargestellten Schnitt. Wie man unmittelbar erkennt, liegen die Achsen der Einbauvorrichtung 1 und des Rohrleitungssystem 4 im expandierten Zustand des Expansionselementes 7 nunmehr koaxial. Dies ist dadurch erreicht, daß die Einbauvorrichtung 1 durch die über das schlauchförmige Expansionselement 7 verursachten, durch Pfeile angedeuteten Kräfte zwischen der Einbauvorrichtung 1 und den bolzenförmigen Verbindungsmitteln 5 automatisch justiert ist. Dabei werden die bolzenförmigen Verbindungsmittel 5 durch die auftretenden Kräfte jeweils radial nach außen an die Flanschbohrungen 10 gepreßt. Es ist nun ohne weiteres verständlich, daß diese Justierung unabhängig von der gewählten Ausführung des Flansches und evtl. variierender Durchmesser der bolzenförmigen Verbindungsmittel 5 gelingt. In dem in Fig. 3 dargestellten Zustand werden, nun die bolzenförmigen Verbindungsmittel 5 angezogen und somit die Einbauvorrichtung 1 zwischen den Flanschen 2, 3 befestigt. Nach dieser Befestigung kann die Halterung 9 geöffnet werden, wodurch das in dem schlauchförmigen Expansionselement 7 befindliche Kohlendioxidgas ausströmt und somit das schlauchförmige Expansionselement 7 freigegeben wird. An dieser Stelle soll noch erwähnt werden, daß sich für das schlauchförmige Expansionselement 7 beispielsweise ein handelsüblicher Gartenschlauch mit kreuzweise geflochtener Bewehrung hervorragend eignet.

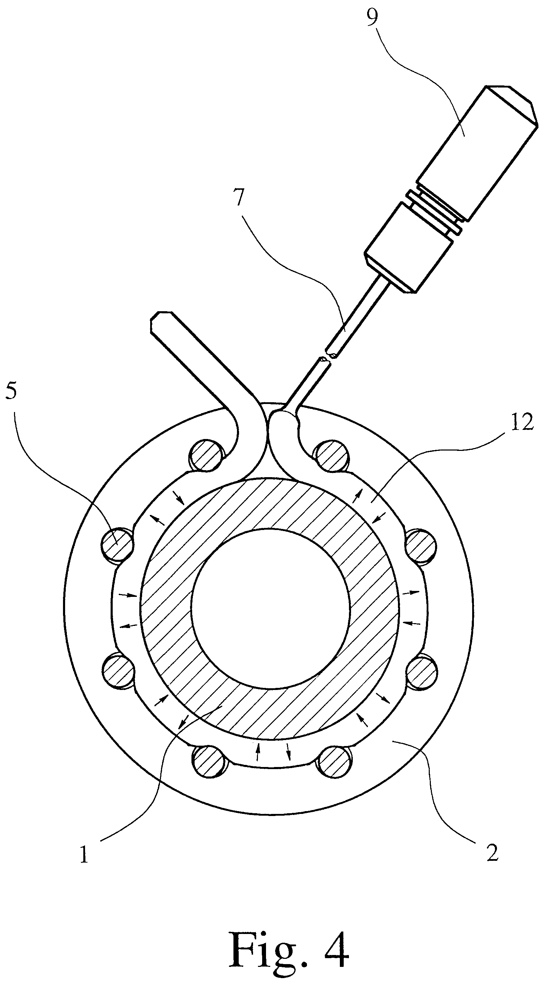

Fig. 4 zeigt nun ein Ausführungsbeispiel der erfindungsgemäßen Justiervorrichtung, bei der das Expansionselement 7 mit einer Manschette 12 verbunden ist; das schlauchförmige Expansionselement 7 ist gleichsam in die Manschette 12 integriert. Dazu darf ergänzend auf Fig. 6 verwiesen werden, die zeigt, daß das Expansionselement 7 meanderförmig in der Manschette 12 angeordnet ist. Bei der in Fig. 4 dargestellten Ausführungsform der erfindungsgemäßen Justiervorrichtung wird also die Manschette 12 mit dem integrierten Expansionselement 7 zwischen die Einbauvorrichtung 1 und die Verbindungselement 5 gelegt. Das kann einfacher sein als das für das Ausführungsbeispiel nach den Fig. 1 bis 3 notwendige Umwickeln der Einbauvorrichtung 1 mit dem schlauchförmigen Expansionselement 7.

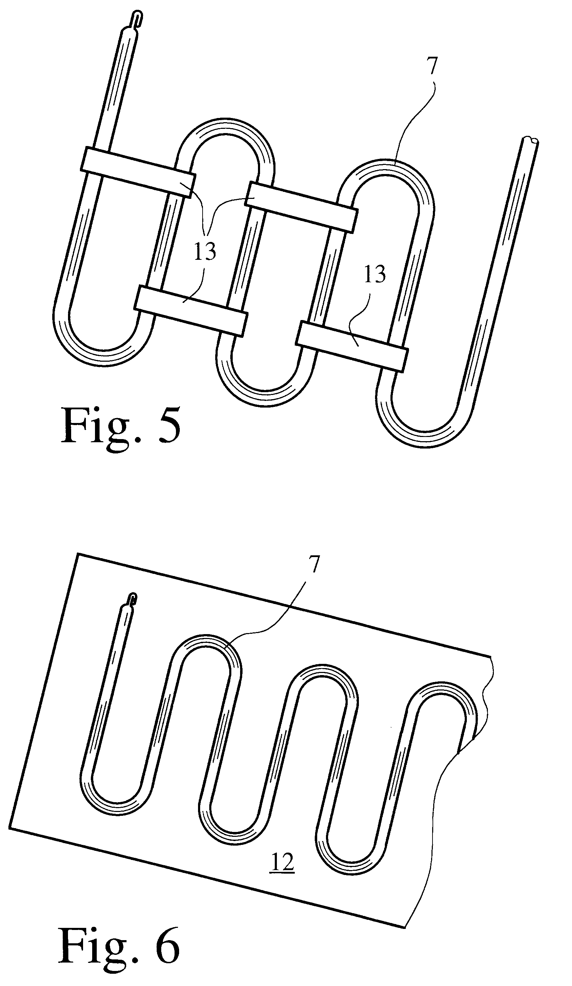

Es besteht auch die Möglichkeit, wie dies in Fig. 5 skizzenhaft dargestellt ist, das schlauchförmige Expansionselement 7 meanderförmig zu legen und durch Verbindungselemente 13 in der meanderförmigen Lage zu fixieren. Eine solche Ausführungsform kann in gleicher Weise wie die Ausführungsform nach den Fig. 4 und 6 um die Einbauvorrichtung 1 gelegt werden.

Abschließend soll nur der Vollständigkeit halber erwähnt werden, daß die erfindungsgemäße Justiervorrichtung selbstverständlich auch in Verbindung mit Einbauvorrichtungen einsetzbar ist, die selbst Flansche aufweisen.

## Patentansprüche

1. Justiervorrichtung zur Justierung einer Einbauvorrichtung (1) zwischen zwei Flanschen (2, 3) eines Rohrleitungssystems (4), wobei die beiden Flansche (2, 3) über vorzugsweise bolzenförmige Verbindungsmittel (5) verbindbar sind, **dadurch gekennzeichnet**, daß die Justiervorrichtung im wesentlichen aus einem durch Einströmen eines Mediums expandierbaren Expansionselement (7) besteht und daß das Expansionselement (7) im expandierten Zustand an der Einbauvorrichtung (1) und den Verbindungselementen (5) anliegt.

2. Justiervorrichtung nach Anspruch 1, dadurch gekennzeichnet, daß das Expansionselement (7) aus einem möglichst unelastischen Material besteht.

3. Justiervorrichtung nach Anspruch 1 oder 2, dadurch gekennzeichnet, daß das Expansionselement (7) im wesentlichen manschettenförmig ausgebildet ist.

4. Justiervorrichtung nach Anspruch 1 oder 2, dadurch gekennzeichnet, daß das Expansionselement (7) im wesentlichen schlauchförmig ausgebildet ist und die Länge des schlauchförmigen Expansionselementes (7) ein Vielfaches des Umfangs der Einbauvorrichtung (1) beträgt.

5. Justiervorrichtung nach Anspruch 4, dadurch gekennzeichnet, daß das schlauchförmige Expansionselement (7) mit einer Manschette (12) verbunden ist.

6. Justiervorrichtung nach einem der Ansprüche 4 oder 5, dadurch gekennzeichnet, daß das schlauchförmige Expansionselement (7) an einem Ende (11) fest verschlossen ist.

7. Justiervorrichtung nach einem der Ansprüche 4 oder 5, dadurch gekennzeichnet, daß das schlauchförmige Expansionselement (7) an einer beliebigen Stelle verschließbar ist.

8. Justiervorrichtung nach Anspruch 7, dadurch gekennzeichnet, daß das schlauchförmige Expansionselement (7) durch eine Klemmvorrichtung verschlossen ist.

9. Justiervorrichtung nach einem der Ansprüche 4 oder 8, dadurch gekennzeichnet, daß das Medium von einem zweiten Ende her in das schlauchförmige Expansionselement (7) einströmt.

10. Justiervorrichtung nach einem der Ansprüche 1 bis 9, dadurch gekennzeichnet, daß als Medium das Gas einer Hochdruckpatrone (8) einsetzbar ist.
